# FASCICULE DE BREVET EUROPEEN

(11) **EP 2 346 319 B1**
(45) Date de publication et mention de la délivrance du brevet: **12.12.2012**
(21) Numéro de dépôt: 09787353.3
(22) Date de dépôt: 02.10.2009
(51) Int. Cl.: A01M 1/14

(54) **PIEGE A PUNAISES DE LIT**
BETTWANZENFALLE
BEDBUG TRAP

(30) Priorité: 17.10.2008 FR 0857088
(43) Date de publication de la demande: 27.07.2011
(73) Titulaire: Dakem, 92400 Courbevoie (FR)
(72) Inventeur: MESSIAN, Gilles, F-92250 La Garennes-colombes (FR)
(74) Mandataire: Leszczynski, André
(86) Numéro de dépôt international: PCT/IB2009/054328
(87) Numéro de publication internationale: WO 2010/043995

(56) Documents cités:
- WO-A-2007/027601
- DE-C- 207 643
- US-A- 3 304 646
- US-A- 4 217 722
- US-A- 5 454 186

## Description

La présente invention concerne le domaine du traitement des nuisibles. Plus particulièrement, l'invention concerne la capture des punaises de lit.

Les punaises de lit (Cimex lectularius) sont des insectes particulièrement robustes et difficiles à éliminer. Ainsi, il importe de les détecter ou de les éliminer, par exemple par capture, le plus tôt possible.

La demande de brevet WO 2007/027601 décrit un dispositif pour capturer les punaises de lit de façon à les détruire ou à contrôler leur population. Un autre type de piège à punaises est décrit dans DE 207643 C. Cependant les pièges connus ne sont pas adaptés à une capture de toutes les tailles d'individus juvéniles ou adultes. Ainsi les punaises peuvent même trouver des lieux de refuge à l'intérieur des pièges, ou derrière le piège. L'efficacité de tels pièges soit être améliorée pour permettre une meilleure élimination ou un meilleur contrôle des punaises.

La présente invention a ainsi pour objectif de palier un ou plusieurs des inconvénients de l'art antérieur notamment grâce à un piège à punaises de lit comprenant au moins un premier panneau plan en matière fibreuse et un second panneau en matière fibreuse, le premier panneau comprenant une zone recouverte d'un adhésif de fixation au second panneau, le second panneau comprenant, sur au moins une face, une bande d'adhésif de largeur inférieure à celle du premier panneau, et le premier panneau comprenant une zone recouverte d'un adhésif disposée à distance et en vis-à-vis de la bande d'adhésif, caractérisé par le fait que le second panneau est plan, et par le fait que le premier et respectivement le second panneau sont réalisés par une première et respectivement une seconde partie, à partir d'un même panneau initial plan en matière fibreuse préalablement encollé puis replié sur lui-même de façon à ce que la première partie et la seconde partie soient face à face, la bande d'adhésif s'étendant sur la seconde partie du panneau initial, étant prolongée sur la première partie du panneau initiale, la zone de fixation entre les première et seconde parties du panneau initial étant réalisée par des plots d'adhésif disposés sur le panneau initial et d'épaisseur supérieure à celle de la bande d'adhésif prolongée, formant des canaux.

Selon une particularité de l'invention, la bande d'adhésif prolongée s'étend perpendiculairement à un axe selon lequel le panneau initial est replié sur lui-même, de façon à former deux portions de la bande d'adhésif prolongée disposées en vis-à-vis, en position repliée.

Selon une autre particularité, la bande d'adhésif prolongée s'étend parallèlement à un bord du panneau initial.

Selon une autre particularité, les plots d'adhésif sont disposés sur une seule des deux parties du panneau initial et de chaque côté de la bande d'adhésif prolongée.

Selon une autre particularité, les plots d'adhésif sont alignés selon des lignes et des colonnes de façon à former des passages dont les bords latéraux sont collants.

Selon une autre particularité, les panneaux sont réalisés en carton.

De manière non limitative, le piège selon l'invention peut être disposé à proximité des lieux de séjour ou de passage des punaises, tels que les plinthes, les têtes et pieds de lit, ou les bâtis de sommier, ou d'autres endroits proposant des fissures ou des matières poreuses ou rugueuses telles que du bois, du carton, du papier épais attirant les punaises de lit.

L'invention pourra être mieux comprise à la lecture de la description détaillée qui va suivre, à la lecture d'un exemple de mise en oeuvre non limitatif de celle-ci, et à l'examen des dessins annexés dans lesquels :
- la figure 1 représente une vue de dessus d'un exemple d'éléments de fabrication d'un piège selon l'invention en cours de réalisation,
- la figure 2 représente une vue de côté des éléments de piège de la figure 1,
- les figures 3 et 4 représentent des vues de côtés, selon deux points de vue opposés, d'un exemple de piège.

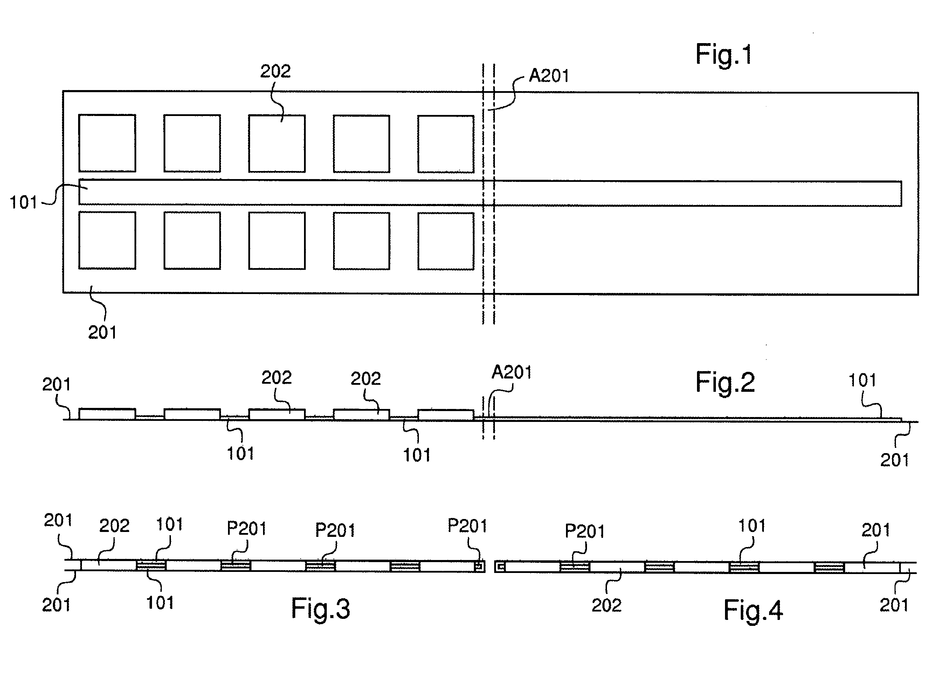

La figure 1 montre un exemple de réalisation de l'invention grâce à un carton plan (201) sur lequel est disposé une bande de colle (101), le carton étant par exemple rectangulaire, la bande de colle (101) étant par exemple longitudinale et s'étendant sur toute la longueur du carton. Le carton (201) plan est par exemple destiné à être replié en deux selon un axe (A201) médian, de façon à former deux parties du carton venant l'une en face de l'autre et jointe par un bord fin correspondant à l'axe de rotation avec par exemple deux lignes de pliures. La zone de pliage (A201) est par exemple une zone de largeur déterminée correspondant à la hauteur du piège et destinée à être disposée à angle droit par rapport aux deux parties principales du support en carton (201). Des plots (202) épais d'adhésif sont par exemple disposés de chaque côté de la bande (101) d'adhésif. De manière non limitative, le support en carton (201) peut aussi former un piège carré ou triangulaire ou rond ou ovale ou de toute forme géométrique. Les plots (202) d'adhésifs épais sont disposés de chaque côté de la bande d'adhésif (101) fine et sont par exemple d'épaisseur supérieure à deux fois l'épaisseur de la bande d'adhésif (101). Ces plots (202) une fois le carton replié en deux, permettent de joindre les surfaces en vis-à-vis des deux parties repliées l'une sur l'autre.

La figure 2 montre notamment une vue de côté d'éléments de fabrication du dispositif de capture des punaises selon l'invention. De manière non limitative, les plots peuvent disposés d'un seul côté du carton séparé en deux par la zone (A201) de pliage.

Les figures 3 et 4 montrent une vue d'un dispositif de capture, prêt à l'utilisation. La figure 3 montre par exemple une vue de côté tandis que la figure 4 montre une vue de côté d'un point de vue opposé. Le carton (201) est replié sur lui-même, les plots d'adhésif (202) joignant les deux parties du carton. La bande d'adhésif (101) fine est en regard d'elle-même et un passage (P201) est laissé entre ces deux bandes d'adhésif. Deux cartons séparés pourraient aussi être disposés en vis-à-vis pour réaliser une pièce similaire, mais une fabrication par pliage est plus simple à réaliser.

De manière non limitative, les plots sont par exemple disposés en matrices ou en lignes et en colonnes. De cette façon, les plots (202) d'adhésif joignant les deux surfaces, réalisent un passage pour les punaises de lit dans lequel les côtés latéraux sont enduits de colle. Les punaises peuvent ainsi se coller sur le côté des plots (202) d'adhésif.

Le support (201) peut être du carton ou du papier épais ou une autre matière fibreuse. Les plots d'adhésif disposés comme représenté sur la figure 1 de part et d'autres de la bande longitudinale d'adhésif peuvent aussi être en contact avec la bande (101) longitudinale. La bande d'adhésif fine (101) repliée sur elle-même pour former un passage piégeant est particulièrement avantageuse puisque la surface supérieure et la surface inférieure du passage, dans la zone comprenant la bande d'adhésif, sont toutes deux encollées. L'axe de pliage sera par exemple pris perpendiculaire à la bande d'adhésif fine ou de façon à ce que la bande soit repliée sur elle-même au moins en partie. Ainsi les punaises passant dans ce passage (P201) restent piégées contre la paroi inférieure ou supérieure. Un appât peut aussi être prévu dans le piège, le carton étant par exemple imbibé d'un liquide comprenant des phéromones attractives pour les punaises de lit. Même sans appât, le piège selon l'invention forme un endroit particulièrement attractif pour les punaises de lit puisqu'il propose des passages étroits dans lesquels les punaises viennent se loger. Mais de façon avantageuse, le piège selon l'invention est réalisé pour que les punaises de lit, quelle que soit leur taille, soient piégées et retenues sur un adhésif.

Un procédé de fabrication d'un piège à punaises de lit comprend par exemple une étape d'encollage, d'au moins une première et une seconde surfaces d'au moins un panneau plan en matière fibreuse, la première surface et la seconde surface étant destinées à venir à distance et en face l'une de l'autre, de façon à former un passage de circulation des punaises.

L'étape d'encollage comprend l'application d'une bande (101) d'adhésif sur toute une longueur du panneau et est suivie d'une étape de pliage de ce panneau selon un axe (A201) ou une zone de pliage, perpendiculaire à la bande d'adhésif, le panneau étant plié en deux de façon à conserver une distance minimale entre les surfaces encollées et disposées en vis-à-vis l'une de l'autre. L'étape de pliage est précédée d'une application de plots d'adhésif (202) d'épaisseur supérieure à deux fois celle de la bande d'adhésif (101), de façon à joindre, après pliage, une première partie du panneau et une seconde partie du panneau disposées initialement de part et d'autre de l'axe de pliage.

Grâce à la présente invention, les punaises de toute taille peuvent être attrapées. Après avoir capturé les punaises, de manière non limitative le piège est par exemple démonté par l'utilisateur qui peut contrôler si le lieu où est disposé le piège, est infesté ou non par les punaises de lit. Après avoir contrôlé le piège ou non, l'utilisateur peut jeter le piège dans la poubelle ou le brûler dans un incinérateur. Le piège est particulièrement économe en matières premières et simple à fabriquer. Le piège peut être réalisé de toute taille allant de un à quelques centimètres à des dizaines de centimètres, tout en restant léger et facile à installer.

La présente invention ne se limite pas à l'exemple précédemment décrit et les modifications évidentes pour l'homme du métier entrant dans le cadre de la présente invention telle que définie par les revendications annexées.

## Revendications

1. Piège à punaises de lit comprenant au moins un premier panneau plan en matière fibreuse et un second panneau en matière fibreuse, le premier panneau comprenant une zone recouverte d'un adhésif de fixation au second panneau, le second panneau comprenant, sur au moins une face, une bande (101) d'adhésif de largeur inférieure à celle du premier panneau, et le premier panneau comprenant une zone recouverte d'un adhésif disposée à distance et en vis-à-vis de la bande d'adhésif,
**caractérisé par le fait que** le second panneau est plan, et **par le fait que** le premier et respectivement le second panneau sont réalisés par une première et respectivement une seconde partie, à partir d'un même panneau (201) initial plan en matière fibreuse préalablement encollé puis replié sur lui-même de façon à ce que la première partie et la seconde partie soient face à face, la bande (101) d'adhésif s'étendant sur la seconde partie du panneau initial, étant prolongée sur la première partie du panneau initiale, la zone de fixation entre les première et seconde parties du panneau initial étant réalisée par des plots (202) d'adhésif disposés sur le panneau initial et d'épaisseur supérieure à celle de la bande d'adhésif prolongée, formant des canaux.

2. Piège selon la revendication 1, **caractérisé par le fait que** la bande (101) d'adhésif prolongée s'étend perpendiculairement à un axe (A201) selon lequel le panneau initial est replié sur lui-même, de façon à former deux portions de la bande d'adhésif prolongée disposées en vis-à-vis, en position repliée.

3. Piège selon les revendications 1 ou 2, **caractérisé par le fait que** la bande d'adhésif prolongée s'étend parallèlement à un bord du panneau initial (201).

4. Piège selon l'une des revendications 1 à 3, **caractérisé par le fait que** les plots (202) d'adhésif sont disposés sur une seule des deux parties du panneau initial et de chaque côté de la bande (101) d'adhésif prolongée.

5. Piège selon la revendication 4, **caractérisé par le fait que** les plots (202) d'adhésif sont alignés selon des lignes et des colonnes de façon à former des passages dont les bords latéraux sont collants.

6. Piège selon l'une des revendications 1 à 5, **caractérisé par le fait que** les panneaux sont réalisés en carton.

## Claims

1. A bedbug trap comprising at least a first plane panel of fibrous material and a second panel of fibrous material, the first panel having a zone covered in an adhesive for fastening to the second panel, the second panel including a strip of adhesive (101) on at least one face, which adhesive strip is of a width that is less than the width of the first panel, and the first panel including a zone that is covered in an adhesive that is located at a distance from and facing the adhesive strip, **characterized in that** the second panel is plane, and the first and second panels are made of respective first and second portions of a single initial plane panel (201) of fibrous material that is previously coated in adhesive and then folded in half so that the first portion and the second portion face each other, the adhesive strip (101) extending over the second portion of the initial panel, being prolonged over the first portion of the initial panel, the fastening zone between the first and second portions of the initial panel being implemented by adhesive spots (202) placed on the initial panel and of thickness greater than the thickness of the prolonged adhesive strip, thereby forming channels.

2. A trap according to claim 1, **characterized in that** the prolonged adhesive strip (101) extends perpendicularly to an axis (A201) whereby the initial panel is folded in half, so as to form two prolonged adhesive strip portions that are placed facing each other in the folded position.

3. A trap according to claims 1 or 2, **characterized in that** the prolonged adhesive strip extends parallel to an edge of the initial panel (201).

4. A trap according to one of claims 1 to 3, **characterized in that** the adhesive spots (202) are placed on only one of the two portions of the initial panel and on either side of the prolonged adhesive strip (101).

5. A trap according to claim 4, **characterized in that** the adhesive spots (202) are in alignment along rows and columns so as to form passages presenting lateral sides that are sticky.

6. A trap according to one of claims 1 to 5, **characterized in that** the panels are made of cardboard.

## Patentansprüche

1. Bettwanzenfalle, umfassend zumindest eine erste ebene Platte aus Fasermaterial und eine zweite Platte aus Fasermaterial, wobei die erste Platte eine mit einem Klebstoff bedeckte Zone zur Befestigung an der zweiten Platte aufweist, die zweite Platte auf mindestens einer Seite einen Klebestreifen (101) von einer geringeren Länge als der der ersten Platte aufweist, und die erste Platte eine Zone aufweist, die mit einem Klebstoff bedeckt ist, der vom Klebestreifen entfernt und diesem gegenüber angeordnet ist,
**gekennzeichnet dadurch, dass** die zweite Platte eben ist und dass die erste und die zweite Platte jeweils durch einen ersten und einen zweiten Teil aus einer einzigen ebenen Anfangsplatte (201) aus Fasermaterial gebildet sind, die zuvor verleimt und dann über sich selbst auf eine Weise gefaltet worden ist, dass sich der erste und der zweite Teil gegenüberstehen, wobei sich der Klebestreifen (101) über den zweiten Teil der Anfangsplatte erstreckt und über den zweiten Teil der Anfangsplatte verlängert ist, wobei die Befestigungszone zwischen dem ersten und dem zweiten Teil der Anfangsplatte durch Kontaktpunkte (202) mit Klebstoff gebildet ist, die auf der Anfangsplatte und mit einem größeren Zwischenabstand als dem zum verlängerten Klebestreifen angeordnet sind, wodurch Kanäle gebildet werden.

2. Falle nach Anspruch 1, **gekennzeichnet dadurch, dass** sich der verlängerte Klebestreifen (101) senkrecht zu einer Achse (A201) erstreckt, entlang derer die Anfangsplatte über sich selbst gefaltet ist, so dass zwei Abschnitte des verlängerten Klebestreifens gebildet werden, die einander in der gefalteten Stellung gegenüberliegen.

3. Falle nach Anspruch 1 oder 2, **gekennzeichnet dadurch, dass** sich der verlängert Klebestreifen parallel zu einer Kante der Anfangsplatte (201) erstreckt.

4. Falle nach einem der Ansprüche 1 bis 3, **gekennzeichnet dadurch, dass** die Kontaktpunkte (202) mit Klebstoff auf nur einem der zwei Teile der Anfangsplatte und auf jeder Seite des verlängerten Klebestreifens (101) angeordnet sind.

5. Falle nach Anspruch 4, **gekennzeichnet dadurch, dass** die Kontaktpunkte (202) mit Klebstoff entlang Zeilen und Spalten ausgerichtet sind, so dass Durchgänge gebildet werden, deren Seitenwände klebrig sind.

6. Falle nach einem der Ansprüche 1 bis 5, **gekennzeichnet dadurch, dass** die Platten aus Pappe gebildet sind.
